# FASCICULE DE BREVET EUROPEEN

(11) **EP 2 477 484 B1**
(45) Date de publication et mention de la délivrance du brevet: **25.02.2015**
(21) Numéro de dépôt: 10770563.4
(22) Date de dépôt: 15.09.2010
(51) Int. Cl.: A01N 1/00, A01N 35/08, A01P 1/00

(54) **COMPOSITION POUR LE TRAITEMENT EXTERNE DE CADAVRES**
ZUSAMMENSETZUNG ZUR AUSSENBEHANDLUNG VON LEICHEN
COMPOSITION FOR THE EXTERNAL TREATMENT OF CORPSES

(30) Priorité: 17.09.2009 FR 0956395
(43) Date de publication de la demande: 25.07.2012
(73) Titulaire: OGF, 75019 Paris (FR)
(72) Inventeur: GRAUGNARD, Henri, 13520 Le Paradou (FR); POLI, Laura, 74200 Marin (FR); DISSARD, Dominique, 57330 Entrance (FR); GILOTIN, Denis, 69780 Mions (FR); JAY, Jean-Charles, 38122 Monsteroux Milieu (FR)
(74) Mandataire: Blot, Philippe Robert Emile
(86) Numéro de dépôt international: PCT/FR2010/051916
(87) Numéro de publication internationale: WO 2011/033221

(56) Documents cités:
- WO-A1-2006/059126
- WO-A2-02/43484
- US-A- 5 266 217

## Description

La présente invention concerne une nouvelle composition destinée au traitement des blessures externes et des escarres, et plus particulièrement dans le cadre de soins de thanatopraxie.

Il existe des compositions destinées au traitement précité comprenant du formaldéhyde. Toutefois, le formaldéhyde est un composé toxique et corrosif, et sa manipulation est donc dangereuse pour les opérateurs. Par conséquent, le développement de compositions exemptes de formaldéhyde est nécessaire.

De nombreux traitements des parties internes du corps lors de soins de thanatopraxie existent à ce jour. Par exemple, la Demanderesse a déjà décrit dans la demande de brevet français n° 08/51637 déposée le 13 mars 2008 une solution destinée à une injection artérielle ou dans les cavités.

Toutefois, les traitements des tissus intérieurs du corps ne permettent pas de protéger efficacement les zones potentiellement touchées et abîmées qui se situent parfois sur les zones externes du corps. En effet, le traitement effectué par irrigation du circuit sanguin ou au travers des cavités ne peut être, pour les zones qui sont externes au corps, d'une efficacité suffisante pour enrayer la dégradation des tissus ainsi touchés et présentant des risques élevés de dégradation rapide.

Or, les zones concernées sont généralement celles qui ont fait l'objet de traumatismes violents générés par des accidents corporels ou qui résultent simplement d'une autopsie ou de dégradations/ouvertures des tissus (les escarres) résultant des pressions répétées de certaines parties du corps sur des objets environnants. C'est le cas notamment d'escarres résultant de la position couchée dans un lit d'hôpital par exemple dont les pressions répétées de certaines parties du corps (dos, coudes, chevilles ....) peuvent conduire à l'apparition d'escarres ouvertes qui sont des zones nécrosées très infectieuses pouvant être profondes et qui sont difficiles à soigner. Dans ces cas de figure, on assiste à une dégradation et à un pourrissement de ces tissus soit préexistant à la mort du défunt (cas des escarres) et/ou une dégradation rapide des plaies qui s'accompagnent d'odeurs fortes et persistantes extrêmement préjudiciables au contexte de présentation du défunt à la famille et aux proches.

Il apparaît donc nécessaire, afin d'enrayer la dégradation de ces zones et de juguler les odeurs, de procéder à un traitement qui consiste à recouvrir/badigeonner les zones concernées par une substance stérilisante et à les recouvrir par des pansements étanches.

WO 2006/059126 décrit des fluides contenant par exemple du bronopol pour le traitement externe des cadavres.

A la connaissance des inventeurs, il n'existe pas de composition adaptée au traitement des blessures externes et des escarres qui soit efficace et peu dangereuse pour l'environnement et les opérateurs.

La présente invention a donc pour but de fournir une composition stérilisante, qui arrête rapidement la dégradation et le pourrissement des tissus pour une durée suffisante (de l'ordre d'une quinzaine de jours).

Un autre but de la présente invention consiste à fournir une composition pouvant être étalée facilement et qui adhère au corps et à la peau.

Enfin, la présente invention a également pour but de fournir une composition colorée, de façon à ce qu'elle soit, compte tenu de son aspect biocide, totalement repérable pour pouvoir procéder à la réalisation des pansements couvrant toute la surface des zones concernées.

Ainsi, la présente invention concerne l'utilisation d'une composition comprenant du 2-bromo-2-nitropropane-1,3-diol pour le traitement externe de tissus de cadavres, notamment pour le traitement des escarres et des blessures externes présentes sur de tels tissus.

Plus particulièrement, la présente invention concerne l'utilisation d'une composition comprenant du 2-bromo-2-nitropropane-1,3-diol et au moins un agent gélifiant pour le traitement externe de tissus de cadavres, notamment pour le traitement des escarres et des blessures externes présentes sur de tels tissus.

En particulier, la composition selon l'invention peut être utilisée pour la réalisation de soins de thanatopraxie ou pour la conservation de pièces anatomiques de cadavres, en particulier de cadavres humains. Les pièces anatomiques correspondent à des morceaux de cadavre, par exemple un membre, une main... La composition peut notamment être utilisée pour la conservation de corps destinés à être disséqués.

Le bronopol ou 2-bromo-2-nitropropane-1,3-diol (C₃H₆BrNO₄) est une poudre cristalline dont la couleur varie de blanc à jaune pâle.

Ce produit est stable et est utilisé comme bactéricide.

Le bronopol est un biocide qui ne présente pas ou peu de risques pour la santé humaine et pour les opérateurs et les personnes en contact avec le défunt. Son utilisation permet d'éviter l'inhalation de vapeurs lors de la réalisation des soins par le praticien. Par ailleurs, le bronopol ne présente aucune volatilité à température ambiante.

Le terme "thanatopraxie" désigne les soins visant à la conservation et à la présentation du corps d'un défunt, à savoir les techniques d'embaumement ou qui s'apparentent à l'embaumement des cadavres.

Le bronopol est utilisé ici pour ses propriétés d'antiseptique et de stérilisant.

En effet, pour ces applications externes par essence, l'utilisation du bronopol découle de ses qualités antiseptiques et stérilisantes constatées dans les autres solutions (artérielles et cavités) ainsi que de son aspect non volatil à température ambiante évitant tout contact respiratoire avec d'éventuelles vapeurs contenant des produits biocides pour les opérateurs des soins en premier lieu et plus généralement pour les personnes (famille, proches..) amenées à stationner à proximité du défunt.

La composition susmentionnée comprend de 2% à 10% en poids, notamment de 3% à 6% en poids de bronopol par rapport au poids total de la composition.

De préférence, elle comprend de l'ordre de 4% en poids (par exemple entre 3,5 et 4,5% en poids) de bronopol par rapport au poids total de la composition.

La composition utilisée dans le cadre de la présente invention comprend une teneur faible en bronopol, ce qui est particulièrement avantageux du point de vue de l'aspect environnemental. Toutefois, cette teneur est suffisante pour obtenir une activité antiseptique et stérilisante suffisante.

Selon un mode de réalisation particulièrement avantageux, la composition susmentionnée est appliquée sur les tissus, et plus particulièrement les escarres et blessures externes, d'un cadavre, notamment d'un cadavre humain.

Selon un mode préféré, la composition susmentionnée comprend en outre un agent diluant. Cet agent diluant confère à ladite composition des caractéristiques de malléabilité, humectantes et d'adhérence au corps.

Parmi les agents diluants, on peut notamment citer l'éthanol et le méthanol, le méthanol étant particulièrement préféré.

L'agent diluant est de préférence présent en une quantité comprise de 4 à 20% en poids, de préférence 4% à 10% en poids par rapport au poids total de la composition.

Selon un mode de réalisation particulièrement avantageux, ladite composition comprend du méthanol comme agent diluant à raison de 6% en poids par rapport au poids total de la composition. Cette quantité est particulièrement avantageuse en ce qui concerne la viscosité, la malléabilité et l'adhérence obtenue pour ladite composition. En effet, la quantité doit être choisie de telle sorte que la composition obtenue présente un aspect "onctueux". Or, une quantité trop importante d'agent diluant n'est pas avantageuse car la composition obtenue serait trop liquide.

La quantité d'agent diluant est de préférence inférieure à 10% en poids par rapport au poids total de la composition dans la mesure où l'augmentation du pourcentage d'agent diluant conduit à une diminution progressive de la viscosité nuisant aux caractéristiques d'adhérence de la composition sur les plaies traitées.

Selon un mode préféré, la composition susmentionnée comprend en outre un agent gélifiant. Cet agent gélifiant confère à la composition un aspect de pâte, ce qui est justement recherché pour les applications envisagées. La composition ainsi obtenue est donc sous la forme d'un baume.

Parmi les agents gélifiants, on peut notamment citer l'alginate de sodium.

L'agent gélifiant est de préférence présent en une quantité comprise de 5% à 15% en poids par rapport au poids total de la composition.

Selon un mode de réalisation particulièrement avantageux, ladite composition comprend de l'alginate de sodium comme agent gélifiant à raison de 10% en poids par rapport au poids total de la composition. Cette quantité est particulièrement avantageuse en ce qui concerne la consistance et la malléabilité de ladite composition. En effet, la quantité doit être choisie de telle sorte que la composition obtenue présente un aspect "onctueux". Or, une quantité trop importante d'agent gélifiant entraîne un durcissement de la composition. La viscosité est alors élevée, ce qui entraîne une mauvaise malléabilité ainsi qu'une adhérence aux tissus faible.

De manière générale, les quantités préférées d'agent gélifiant et d'agent diluant précitées permettent que la composition puisse être étalée facilement et efficacement et que sa consistance soit telle que le contact avec les tissus soit intégral et qu'une couche de composition étalée sur les tissus soit suffisamment épaisse pour entraver le passage de l'oxygène et donc pour juguler les phénomènes de putréfaction et de passage des gaz et des odeurs.

Selon un mode préféré, la composition susmentionnée comprend en outre un colorant.

Le colorant confère à la composition une coloration forte permettant de bien distinguer les zones recouvertes de ladite composition, afin d'éviter tout contact avec ces zones et de pouvoir les recouvrir complètement avec des pansements étanches.

Parmi les colorants, on peut citer tout colorant des tissus. Parmi les colorants utilisés, on peut citer, outre l'amarante (qui donne une coloration rouge rosé) et l'éosine (qui donne une coloration rose), le ponceau (qui donne une coloration rouge cerise), l'érythrosine (qui donne une coloration rouge cerise) et l'acide carminique (qui donne une coloration rouge carmin).

Ces colorants sont inertes, c'est-à-dire qu'ils ne servent qu'à pigmenter la composition de l'invention et ces produits sont classés par gamme de couleur en fonction des sujets rencontrés.

Selon un mode de réalisation particulièrement préféré, la composition utilisée dans le cadre de la présente invention comprend de l'éosine à titre de colorant. Ainsi, de préférence, le colorant utilisé dans le baume selon la présente invention est le même colorant que celui utilisé dans la solution artérielle avec cependant une concentration un peu plus forte de façon à conférer au baume une couleur plus soutenue lui permettant d'être totalement repérable en cours de soins.

La présente invention concerne donc l'utilisation d'un baume pour le traitement des escarres et des blessures externes dans le cadre de soins de thanatopraxie, ledit baume comprenant de l'eau, du bronopol, un agent diluant tel que le méthanol, un agent gélifiant tel que l'alginate de sodium, et un colorant tel que l'éosine.

La présente invention concerne également une composition comprenant du 2-bromo-2-nitropropane-1,3-diol, pour le traitement externe de tissus de cadavres, en particulier pour un traitement des escarres et des blessures externes, ladite composition comprenant de 2% à 10% en poids, notamment de 3% à 6% en poids de 2-bromo-2-nitropropane-1,3-diol par rapport au poids total de la composition.

De préférence, cette composition est destinée à être appliquée sur les escarres et les blessures externes de cadavres, notamment lors de la réalisation de soins de thanatopraxie.

La présente invention concerne également une composition comprenant du 2-bromo-2-nitropropane-1,3-diol et au moins un agent gélifiant, pour le traitement externe de tissus de cadavres.

La présente invention concerne également en tant que telles les compositions susmentionnées. Ainsi, la présente invention concerne une composition comprenant du 2-bromo-2-nitropropane-1,3-diol, un agent diluant et un agent gélifiant, ladite composition étant caractérisée en ce qu'elle comprend de 2% à 10% en poids, notamment de 3% à 6% en poids de 2-bromo-2-nitropropane-1,3-diol par rapport au poids total de la composition.

La composition susmentionnée peut également contenir un colorant.

La présente invention concerne également une composition comprenant du 2-bromo-2-nitropropane-1,3-diol, un agent diluant et de l'alginate de sodium à titre d'agent gélifiant, ladite composition étant caractérisée en ce qu'elle comprend de 2% à 10% en poids, notamment de 3% à 6% en poids de 2-bromo-2-nitropropane-1,3-diol par rapport au poids total de la composition.

La composition susmentionnée comprend de préférence de 4% à 20% en poids, de préférence de 4 à 10% en poids, d'agent diluant, notamment du méthanol ou de l'éthanol, par rapport au poids total de la composition.

Elle comprend également de 5% à 15% en poids d'agent gélifiant, notamment de l'alginate de sodium, par rapport au poids total de la composition.

Selon un mode de réalisation avantageux, la composition selon l'invention est sous forme de baume et est destinée à être appliquée sur les blessures externes et les escarres.

Elle est plus particulièrement destinée à être appliquée sur les blessures externes et les escarres de cadavres humains, lors de la réalisation de soins de thanatopraxie.

Selon un mode de réalisation particulièrement préféré, la composition selon l'invention comprend, pour 1 000 grammes :
- bronopol : 40 g
- méthanol ou éthanol (agent diluant) : 60 g
- alginate de sodium (agent gélifiant) : 100 g
- eau : solde
- éosine (colorant) : quelques gouttes pour la coloration (typiquement 10 gouttes)

Dans le cadre de la présente invention, les compositions utilisées ne comprennent pas de préférence de tensioactif, et plus particulièrement elles ne comprennent pas de composé ammonium quaternaire. De préférence, les compositions selon l'invention ne comprennent pas d'acide gallique ni d'alcool polyvinylique.

### PARTIE EXPÉRIMENTALE

Un baume a été préparé à partir de la composition suivante (1 000 g) :
- bronopol : 40 g
- méthanol : 60 g
- alginate de sodium : 100 g
- éosine : 10 gouttes
- eau : solde

Suite à l'utilisation de ce baume qui s'étale avec beaucoup de facilité et d'adhérence sur les parties externes infectées (ou qui peuvent rapidement le devenir), on a constaté l'arrêt immédiat de la dégradation et du pourrissement des tissus s'accompagnant par la disparition des odeurs présentes.

Après l'exécution des soins et suite au recouvrement des plaies, aucune odeur de quelque nature que ce soit qui persiste n'a été observée.

Le corps ainsi traité puis habillé ne laissait alors plus apparaître de signe quelconque laissant penser à la présence d'escarres et blessures cachées existantes.

## Revendications

1. Utilisation d'une composition comprenant de 2% à 10% en poids de 2-bromo-2-nitropropane-1,3-diol par rapport au poids total de la composition et au moins un agent gélifiant, présent en une quantité comprise de 5% à 15% en poids par rapport au poids total de la composition, pour un traitement en thanatopraxie des escarres et des blessures externes.

2. Utilisation selon la revendication 1, **caractérisée en ce que** l'agent gélifiant est l'alginate de sodium.

3. Utilisation selon l'une quelconque des revendications 1 ou 2, **caractérisée en ce que** la composition comprend un agent diluant, ledit agent diluant étant présent en une quantité comprise de 4% à 20%, en poids par rapport au poids total de la composition.

4. Utilisation selon la revendication 3, **caractérisée en ce que** l'agent diluant est présent en une quantité de 6%, en poids par rapport au poids total de la composition.

5. Utilisation selon l'une quelconque des revendications 1 à 4, **caractérisée en ce que** la composition comprend un colorant.

6. Composition comprenant de 2% à 10% en poids de 2-bromo-2-nitropropane-1,3-diol par rapport au poids total de la composition et de l'alginate de sodium en une quantité de 5% à 15% en poids par rapport au poids total de la composition, en tant qu'agent gélifiant.

7. Composition selon la revendication 6, comprenant en outre un colorant.

8. Composition selon la revendication 6 ou 7, **caractérisée en ce qu'**elle comprend de 4% à 20% en poids d'agent diluant par rapport au poids total de la composition.

## Patentansprüche

1. Verwendung einer Zusammensetzung, die im Verhältnis zum Gesamtgewicht der Zusammensetzung 2 bis 10 Gew.-% 2-Brom-2-nitropropan-1,3-diol und mindestens ein Geliermittel, vorhanden in einer Menge von 5 bis 15 Gew.-% inklusive im Verhältnis zum Gesamtgewicht der Zusammensetzung, zur thanatopraktischen Behandlung von wunden Stellen und äußeren Verletzungen umfasst.

2. Verwendung nach Anspruch 1, **dadurch gekennzeichnet, dass** das Geliermittel Natriumalginat ist.

3. Verwendung nach einem der Ansprüche 1 oder 2, **dadurch gekennzeichnet, dass** die Zusammensetzung ein Verdünnungsmittel umfasst, wobei das Verdünnungsmittel in einer Menge von 4 bis 20 Gew.-% inklusive im Verhältnis zum Gesamtgewicht der Zusammensetzung vorhanden ist.

4. Verwendung nach Anspruch 3, **dadurch gekennzeichnet, dass** das Verdünnungsmittel in einer Menge von 6 Gew.-% im Verhältnis zum Gesamtgewicht der Zusammensetzung vorhanden ist.

5. Verwendung nach einem der Ansprüche 1 bis 4, **dadurch gekennzeichnet, dass** die Zusammensetzung einen Farbstoff umfasst.

6. Zusammensetzung, die im Verhältnis zum Gesamtgewicht der Zusammensetzung 2 bis 10 Gew.-% 2-Brom-2-nitropropan-1,3-diol und Natriumalginat in einer Menge von 5 bis 15 Gew.-% inklusive im Verhältnis zum Gesamtgewicht der Zusammensetzung als Geliermittel umfasst.

7. Zusammensetzung nach Anspruch 6, die ferner einen Farbstoff umfasst.

8. Zusammensetzung nach Anspruch 6 oder 7, **dadurch gekennzeichnet, dass** sie 4 bis 20 Gew.-% Verdünnungsmittel im Verhältnis zum Gesamtgewicht der Zusammensetzung umfasst.

## Claims

1. Use of a composition comprising from 2% to 10% by weight of 2-bromo-2-nitropropane-1,3-diol based on the total weight of the composition, and at least one gelling agent, present in a comprised amount from 5% to 15% by weight based on the total weight of the composition, for thanatopractice treatment of eschars and external injuries.

2. The use according to claim 1, **characterized in that** the gelling agent is sodium alginate.

3. The use according to claim 1 or 2, **characterized in that** the composition comprises a diluent, said diluent being present in a comprised amount from 4% to 20% by weight, based on the total weight of the composition.

4. The use according to claim 3, **characterized in that** the diluent is present in an amount of 6% by weight, based on the total weight of the composition.

5. The use according to any one of claims 1 to 4, **characterized in that** the composition comprises a coloring agent.

6. A composition comprising from 2% to 10% by weight of 2-bromo-2-nitropropane-1,3-diol based on the total weight of the composition and from 5% to 15% by weight of sodium alginate as a gelling agent, based on the total weight of the composition.

7. The composition according to claim 6, further comprising a coloring agent.

8. The composition according to claim 6 or 7, **characterized in that** it comprises from 4% to 20% by weight of diluent based on the total weight of the composition.
